(19) Europäisches Patentamt / European Patent Office / Office européen des brevets

(11) **EP 4 450 142 A1**

(12) **EUROPEAN PATENT APPLICATION**
published in accordance with Art. 153(4) EPC

(43) Date of publication:
**23.10.2024 Bulletin 2024/43**

(21) Application number: **22907451.3**

(22) Date of filing: **13.12.2022**

(51) International Patent Classification (IPC):
**B01D 11/02** (2006.01)   **B01D 61/14** (2006.01)
**B01D 61/22** (2006.01)   **B01D 61/44** (2006.01)
**B01D 61/54** (2006.01)   **B01D 61/58** (2006.01)
**B01D 69/00** (2006.01)   **A24B 15/24** (2006.01)
**A24D 1/20** (2020.01)   **A24B 13/00** (2006.01)

(52) Cooperative Patent Classification (CPC):
**A24B 13/00; A24B 15/24; A24D 1/20; B01D 11/02;**
**B01D 61/14; B01D 61/22; B01D 61/44;**
**B01D 61/54; B01D 61/58; B01D 69/00**

(86) International application number:
**PCT/JP2022/045911**

(87) International publication number:
**WO 2023/112927 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.12.2021 JP 2021202808**

(71) Applicant: **Japan Tobacco Inc.**
**Tokyo 105-6927 (JP)**

(72) Inventors:
• **NANASAKI, Yusuke**
  **Tokyo 130-8603 (JP)**
• **MATSUMOTO, Yuichi**
  **Tokyo 130-8603 (JP)**
• **KUDO, Kenichi**
  **Tokyo 130-8603 (JP)**
• **KAWATA, Masami**
  **Tokyo 130-8603 (JP)**

(74) Representative: **Hoffmann Eitle**
**Patent- und Rechtsanwälte PartmbB**
**Arabellastraße 30**
**81925 München (DE)**

(54) **PLANT EXTRACT PRODUCTION METHOD**

(57) A plant extract production method comprising: an extraction step for obtaining an extract by extraction from a plant dispersion containing a plant a filtration step for obtaining a filtrate by filtering the extract by means of cross-flow filtration; and a dialysis step for dialyzing the filtrate by means of electrodialysis.

FIG. 5

**Description**

Technical Field

The present invention relates to a plant extract production method.

Background Art

Various components contained in plant leaves, stems, roots, or other parts each have unique properties and are used in various applications. One of techniques for separating a specific component from a plant containing multiple components is extraction. This technique is used in a wide range of fields. However, plant extracts obtained by plant extraction may contain not only intended components but also undesired components. It is important to separate and remove such undesired specific components.

For example, plant extracts obtained by extraction from tobacco plants contain components important as pleasure products, such as flavor components that have positive effects on flavors. However, the plant extracts also contain unnecessary components, such as components that generate components of concern, such as proteins of nitrate nitrogen, which is a precursor of tobacco-specific nitrosamines (TSNAs), and components that have no direct effect on flavors, such as proteins contained in many plants, such as RuBisCO.

Examples of methods for separating and removing specific components from tobacco plant extracts include precipitation membrane separation methods involving pH adjustment (Patent Document 1 and Patent Document 2), a filtration method using activated carbon (Patent Document 3), and a distillation method (Patent Document 4). Examples of methods for removing unnecessary components, such as proteins, include a method using oxygen decomposition (Patent Document 5), and ultrafiltration methods and precision filtration methods using filtration based on the molecular weight (Patent Document 6 to Patent Document 8). In particular, examples of methods for separating nitrate nitrogen include an ultrafiltration method or reverse osmosis membrane separation method (Patent Document 9) and an electrodialysis method (Patent Document 10). Of these methods, electrodialysis is a useful technique because electrodialysis can be used to remove TSNAs in tobacco plants (Patent Document 11 and Patent Document 12).

Citation List

Patent Documents

Patent Document 1: U.S. Patent Application Publication No. 3959246
Patent Document 2: Japanese Unexamined Patent Application Publication No. 2016-511004
Patent Document 3: U.S. Patent Application Publication No. 3424171
Patent Document 4: U.S. Patent Application Publication No. 4150677
Patent Document 5: U.S. Patent Application Publication No. 4727889
Patent Document 6: U.S. Patent Application Publication No. 5235992
Patent Document 7: U.S. Patent Application Publication No. 5301694
Patent Document 8: Japanese Unexamined Patent Application Publication No. 3-010667
Patent Document 9: International Publication No. WO 2004/098323
Patent Document 10: U.S. Patent Application Publication No. 4302308
Patent Document 11: Chinese Patent Application Publication No. 104351943
Patent Document 12: Japanese Unexamined PatentApplication Publication No. 2019-518442

Summary of Invention

Technical Problem

As described above, there are various methods for separating and removing impurities, such as proteins, from plant extracts, but there are also problems in these methods. For example, precipitation membrane separation involving pH adjustment uses an alkali and thus requires time and effort to, for example, return the pH to acidic. Distillation may cause decomposition of preferred components, and filtration requires time and effort for membrane regeneration, maintenance, and other works. In addition, electrodialysis may decrease in separation capacity if impurities are present in extracts.

The present invention is directed to a plant extract production method for producing a plant extract by efficiently separating and removing impurities, such as proteins, from plant extracts.

Solution to Problem

As a result of intensive studies, the inventors of the present invention have found that the above problems can be solved by filtration of a plant extract by a particular method and subsequent electrodialysis, completing the present invention.

[1] A plant extract production method including:

an extraction step of obtaining an extract by extraction from a plant dispersion containing a plant;
a filtration step of obtaining a filtrate by filtering the extract by means of cross-flow filtration; and
a dialysis step of dialyzing the filtrate by means of electrodialysis.

[2] The plant extract production method according to [1], wherein the cross-flow filtration involves passing the extract through a filter composed of a filtration membrane having an average pore size of 0.2 $\mu$m or less.
[3] The plant extract production method according to [2], wherein the filtration membrane has an average pore size of 2,000 Da or more and 100,000 Da or less.
[4] The plant extract production method according to any one of [1] to [3], wherein a membrane surface velocity relative to an average pore size of the filtration membrane in the cross-flow filtration is 0.1 mL/min·cm$^2$ or more and 10 mL/min·cm$^2$ or less.
[5] The plant extract production method according to any one of [1] to [4], wherein an applied voltage in the electrodialysis is 30 V or less.
[6] The plant extract production method according to any one of [1] to [5], wherein the plant dispersion further contains water.
[7] The plant extract production method according to any one of [1] to [6], wherein the plant is a tobacco plant.
[8] A method for producing a tobacco product having a mouthpiece portion and a tobacco rod in which wrapping paper is wrapped around a tobacco filling material, the method including:
a step of adding a plant extract produced by the plant extract production method according to any one of [1] to [7] to at least one selected from the group consisting of the tobacco filling material and the wrapping paper.
[9] A method for producing an oral pouch product having an oral composition and a pouch that encloses the oral composition, the method including:
a step of adding, to the oral composition, a plant extract produced by the plant extract production method according to any one of [1] to [7].

Advantageous Effects of Invention

The present invention can provide a plant extract production method for producing a plant extract by efficiently separating and removing impurities, such as proteins, from plant extracts and can further provide a method for producing a tobacco product or an oral pouch product by using the plant extract.

Brief Description of Drawings

[Fig. 1] Fig. 1 is a schematic view of a tobacco product according to an embodiment of the present invention.
[Fig. 2] Fig. 2 is a schematic view of an electric heating tobacco product according to an embodiment of the present invention.
[Fig. 3] Fig. 3 is a schematic view of an electric heating tobacco product according to an embodiment of the present invention.
[Fig. 4] Fig. 4 is a graph showing the measurement results of the protein residual level in Examples.
[Fig. 5] Fig. 5 is a graph showing the nicotine analysis results after electrodialysis in Examples.
[Fig. 6] Fig. 6 is a graph showing the nicotine analysis results after electrodialysis in Examples.

Description of Embodiments

Embodiments of the present invention will be described below in detail, but this description illustrates examples (representative examples) of the embodiments of the present invention. The present invention is not limited to these contents unless the present invention departs from the gist thereof.

In this description, a numerical range expressed by using "to" means a range including the numerical values before and after "to" as the minimum value and the maximum value. "A to B" means A or more and B or less.

<Plant Extract Production Method>

A plant extract production method according to an embodiment of the present invention (hereinafter also referred to simply as a "plant extract production method") includes: an extraction step of obtaining an extract by extraction from a plant dispersion (plant component dispersion) containing a plant; a filtration step of obtaining a filtrate by filtering the extract by means of cross-flow filtration; and a dialysis step of dialyzing the filtrate by means of electrodialysis.

The plant extract production method according to this embodiment may include a step other than the extraction step, the filtration step, and the dialysis step.

[Extraction Step] The plant extract production method according to this embodiment includes the extraction step of obtaining an extract by extraction from a plant dispersion containing a plant.

The plant extract production method according to this embodiment involves: performing cross-flow filtration to separate and remove impurities larger than a particular size in the extract obtained in the extraction step; and then further performing electrodialysis to separate a particular substance and thus to obtain a plant extract without the particular impurities. Examples of the impurities larger than a particular size include proteins commonly contained in plants. The raw material used in the extraction step is not limited as long as it contains a plant.

(Plant)

The type of plant used in the extraction step is not limited and may a seed plant or a plant other than seed plants.

The seed plant may be a gymnosperm or an angiosperm. Examples of the gymnosperm include cycads, such as sago palm; ginkgoales, such as ginkgo; pines, such as Japanese red pine and Japanese black pine; and gnetum, such as G. gnemon. Examples of the angiosperm include Solanaceae, such as tobacco and eggplant; Asteraceae, such as chrysanthemum; Orchidaceae, such as orchids; Fabaceae, such as peas; Poaceae, such as rice; Rubiaceae, such as coffee; Lamiaceae, such as perilla; Euphorbiaceae, such as spurge; and Cyperaceae, such as sedge.

Examples of the plant other than seed plants include pteridophytes, such as bracken and fiddlehead; bryophytes, such as liverworts and hornworts; and algae, such as kelp and wakame seaweed.

In the plant extract production method according to this embodiment, the plant used in this embodiment is preferably a nicotine-containing plant, particularly preferably tobacco (hereinafter referred to as a "tobacco plant") among the plants described above in order to easily separate and remove unnecessary components, such as components that generate components of concern, such as proteins of nitrate nitrogen, which is a precursor of tobacco-specific nitrosamines (TSNAs), and components that have no direct effect on flavors, such as proteins contained in many plants, such as RuBisCO.

The part of the plant used is not limited and may be, for example, leaves, stems, or roots for seed plants, but preferably leaves from the viewpoint of ease of extraction and availability.

In the production method according to this embodiment, leaves of tobacco (hereinafter also referred to as "tobacco leaves") are preferably used as a plant under the suitable conditions described above.

Examples of the type of tobacco leaves include, but are not limited to, flue-cured tobacco, Burley tobacco, oriental tobacco, local tobacco, and other species, such as Nicotiana tabacum or Nicotiana rustica. These types of tobacco leaves can be used singly or can be blended and used during the process of making tobacco leaves into processed tobacco leaves in order to obtain an intended flavor.

(Plant Dispersion)

The plant dispersion is any liquid containing a plant and contains a solvent that can dissolve a substance to be extracted. The solvent may be an organic solvent or an inorganic solvent. For example, when a tobacco plant is used as a plant, the solvent is preferably a solvent that can dissolve nicotine. Examples of the solvent include water, ethylene glycol, propylene glycol, and ethanol. The solvent is preferably water from the viewpoint of safety, cost, and availability.

The plant content in the plant dispersion is typically, but not necessarily, 5 wt% or more, preferably 10 wt% or more, more preferably 15 wt% or more, and typically 50 wt% or less, preferably 45 wt% or less, more preferably 40 wt% or less, still more preferably 35 wt% or less, yet still more preferably 30 wt% or less, yet still more preferably 20 wt% or less.

The solvent content in the plant dispersion is typically, but not necessarily, 50 wt% or more, preferably 55 wt% or more, more preferably 60 wt% or more, still more preferably 65 wt% or more, yet still more preferably 70 wt% or more, and typically 95 wt% or less, preferably 90 wt% or less, more preferably 85 wt% or less.

The plant dispersion may contain components (other components) other than the plant and the solvent. Examples of other components include reducing sugars, natural sweeteners, artificial sweeteners, pH adjusters, buffers, preservatives, and flavorings.

(Extraction)

The extraction method is not limited and may be a known method. For example, the extraction method may involve heating the plant dispersion described above to obtain an extract.

The heating temperature is not limited as long as the plant dispersion can be evaporated at the heating temperature. For example, the heating temperature may be 1°C or higher, preferably 5°C or higher, more preferably 20°C or higher, still more preferably 40°C or higher, yet still more preferably 45°C or higher, yet still more preferably 80°C or higher, and may be 95°C or lower, preferably 90°C or lower. This heating temperature is advantageous particularly in using tobacco plants, namely, in extracting nicotine.

The heating time is not limited and may be, for example, 20 minutes or longer, preferably 30 minutes or longer, more preferably 1 hour or longer, and may be 3 hours or shorter, more preferably 2 hours or shorter. This heating temperature is advantageous particularly in using tobacco plants, namely, in extracting nicotine.

The viscosity of the extract, which is obtained in the extraction step, at 25°C is typically, but not necessarily, 0.7 mPa·s or more, preferably 0.8 mPa·s or more, more preferably 1.0 mPa·s or more, still more preferably 1.5 mPa·s or more, and typically 8 mPa·s or less, preferably 6.0 mPa·s or less, more preferably 4.0 mPa·s or less, still more preferably 2.0 mPa·s or less. The viscosity can be measured by using, for example, a tuning fork vibration viscometer (e.g., a viscometer available from A&D Company, Limited).

[Filtration Step]

The plant extract production method according to this embodiment includes a filtration step of obtaining a filtrate by filtering the extract, which is obtained in the extraction step, by means of cross-flow filtration.

Cross-flow filtration is a type of filtration in which the flow direction of a feed is different from the filtration direction, for example, these directions are perpendicular to each other ("perpendicular" in this description includes substantially perpendicular). Filtration using this method has the following advantages: it is suitable for concentration of large volume filtration, and it easily prevents particle accumulation and clogging of the filtration membrane surface because the flow direction of the feed is different from the filtration direction, and it has a time-saving effect.

The cross-flow filtration method is not limited and may be any known method using cross-flow filtration equipment (e.g., LabUnit M10 available from Alfa LavalAB).

The filtration membrane in the cross-flow filtration may have any form. The filtration membrane may have a planar shape or a cylindrical shape, but preferably has a cylindrical shape in order to downsize the filtration equipment and improve filtration efficiency. When having a cylindrical shape, the filtration membrane may have, for example, a diameter of 5 cm or more and 100 cm or less and a length of 2 cm or more and 2000 cm or less in the axial direction. The form of flow of a feed (extract) is not limited and may or may not be circulation flow The form of flow of the feed (extract) is preferably circulation flow in order to downsize the filtration equipment and improve filtration efficiency.

The material of the filtration membrane is typically, but not necessarily, for example, polyester, polypropylene, polysulfone, hydrophilic polysulfone, polyethersulfone, or fluororesin.

To prevent clogging and improve filtration efficiency, the thickness of the filtration membrane is typically, but not necessarily, 0.1 $\mu$m or more, preferably 0.5 $\mu$m or more, more preferably 1.0 $\mu$m or more, still more preferably 1.5 $\mu$m or more, yet still more preferably 2.0 $\mu$m or more, yet still more preferably 2.5 $\mu$m or more, and the upper limit may be, for example, 1 mm or less.

The area of the filtration membrane can be appropriately set according to the intended use.

The average pore size of the filtration membrane in the case of using a precision filtration membrane is typically, but not necessarily, 0.1 $\mu$m or more, preferably 0.15 $\mu$m or more, and typically 0.5 $\mu$m or less, preferably 0.25 $\mu$m or less, more preferably 0.2 $\mu$m or less in order to prevent clogging and improve filtration efficiency. From the same viewpoint, the pore size of the filtration membrane in the case of using an ultrafiltration membrane is typically 1,000 Da or more, preferably 2,000 Da or more, more preferably 10,000 Da or more, still more preferably 20,000 Da or more, and typically 200,000 Da or less, preferably 100,000 Da or less, more preferably 50,000 Da or less, still more preferably 25,000 Da or less. In general, the average particle size of unnecessary components, such as components that generate components of concern, such as proteins of nitrate nitrogen, which is a precursor of tobacco-specific nitrosamines (TSNAs), and components that have no direct effect on flavors, such as proteins contained in many plants, such as RuBisCO, is 50,000 Da (g/mol) or more and 80,000 Da or less. The average particle size of nicotine is 744.4 Da. The above range is advantageous particularly in using tobacco plants because it is possible to efficiently separate nicotine and components, such as proteins.

Multi-stage filtration using multiple membranes may be used to improve filtration efficiency.

The membrane surface of the filtration membrane may have any porosity.

To prevent clogging and improve filtration efficiency, the membrane surface velocity relative to the average pore size of the filtration membrane is typically, but not necessarily, 0.1 mL/min·cm$^2$ or more, preferably 0.2 mL/min·cm$^2$ or more, more preferably 0.5 mL/min·cm$^2$ or more, still more preferably 0.7 mL/min·cm$^2$ or more, and typically 20 mL/min·cm$^2$ or less, preferably 10 mL/min·cm$^2$ or less, more preferably 7 mL/min·cm$^2$ or less, still more preferably 5 mL/min·cm$^2$ or less, yet still more preferably 2.5 mL/min·cm$^2$ or less. The above range is advantageous particularly in using tobacco plants from the viewpoint of the average particle size of the unnecessary components contained in tobacco plants.

To prevent clogging and improve filtration efficiency, the temperature of the extract being supplied in the cross-flow filtration is typically, but not necessarily, 15°C or higher, preferably 20°C or higher, more preferably 30°C or higher, still more preferably 45°C or higher, typically 95°C or lower, preferably 90°C or lower, more preferably 80°C or lower, still more preferably 70°C or lower. The above range is advantageous particularly in using tobacco plants from the viewpoint of the viscosity of tobacco plants.

[Dialysis Step]

The plant extract production method according to this embodiment includes a dialysis step of dialyzing the filtrate, which is obtained in the filtration step, by means of electrodialysis.

Electrodialysis uses a device including electrodes and an ion exchange membrane that allows only ions to pass through, wherein ions in a solution can be passed through the ion exchange membrane by voltage application between the electrodes to remove a particular substance.

The electrodialysis method is not limited and may be any known method using an electrodialyzer (e.g., MICRO ACILYZER S3, or ACILYZER EX3B available from ASTOM Corporation).

The filtration membrane in the electrodialysis may have any form and typically has a planar shape. For example, filtration membranes, 10 to 300 cm × 5 to 100 cm, can be arranged and used in layers. The form of arrangement of multiple filtration membranes is not limited. The filtration membranes may be arranged with or without a gap therebetween, preferably with a gap therebetween. The form of flow of the feed (extract) is not limited and may or may not be circulation flow. The form of flow of the feed (extract) is preferably circulation flow in order to downsize the filtration equipment and improve filtration efficiency.

The type or size of the electrodes used in the electrodialysis can be appropriately determined according to the filtrate and the electrodialyzer used.

To efficiently perform electrodialysis, the voltage applied between the electrodes is typically, but not necessarily, 1.00 V or more, preferably 1.50 V or more, more preferably 2.00 V or more, still more preferably 1.8 V or more, yet still more preferably 1.85 V or more, and may be 5V or more, or 10 V or more, and typically 50 V or less, more preferably 40 V or less, still more preferably 35 V or less, yet still more preferably 30 V or less, yet still more preferably 20 V or less. If the voltage is too high, not only separation and decomposition (H$^+$ and OH$^-$) of water but also separation and decomposition of other components may occur. The voltage is thus preferably 30 V or less. The concentration of each component contained in the plant extract can be controlled by voltage control. For example, when a tobacco plant is used as a plant, the nicotine content in the plant extract can be changed by changing the voltage. Examples described below indicate that the nicotine content can be efficiently reduced at 30V, and the nicotine content can be efficiently maintained at 10V

The material of the filtration membrane is typically, but not necessarily, for example, regenerated cellulose, cellulose ester, polyacrylonitrile, polysulfone, polymethyl methacrylate, or ethylene vinyl alcohol copolymer.

To prevent clogging and improve filtration efficiency, the thickness of the filtration membrane is typically, but not necessarily, 0.5 μm or more, preferably 0.10 μm or more, more preferably 0.15 μm or more, still more preferably 0.20 μm or more, yet still more preferably 0.25 μm or more, and typically 0.50 μm or less, preferably 0.45 μm or less, more preferably 0.40 μm or less, still more preferably 0.35 μm or less, yet still more preferably 0.30 μm or less.

The area of the filtration membrane can be appropriately set according to the intended use.

To prevent clogging and improve filtration efficiency, the average pore size of the filtration membrane in the case of using an ultrafiltration membrane is typically, but not necessarily, 100 Da or more, preferably 500 Da or more, more preferably 1,000 Da or more, still more preferably 2,000 Da or more, and typically 100,000 Da or less, more preferably 10,000 Da or less. In general, the average particle size of unnecessary components, such as components that generate components of concern, such as proteins of nitrate nitrogen, which is a precursor of tobacco-specific nitrosamines (TSNAs), and components that have no direct effect on flavors, such as proteins contained in many plants, such as RuBisCO, is 50,000 g/mol (Da) or more and 80,000 g/mol (Da) or less. The average particle size of nicotine is 744.4 g/mol (Da). The above range is advantageous particularly in using tobacco plants because it is possible to efficiently separate nicotine and components, such as proteins.

The membrane surface of the filtration membrane may have any porosity.

To prevent clogging and improve filtration efficiency, the membrane surface velocity relative to the average pore size of the filtration membrane is typically, but not necessarily, 0.0001 mL/min·cm$^2$ or more, preferably 0.0005 mL/min·cm$^2$ or more, more preferably 0.001 mL/min·cm$^2$ or more, still more preferably 0.002 mL/min·cm$^2$ or more, yet still more preferably 0.003000 mL/min·cm$^2$ or more, and typically 4 mL/min·cm$^2$ or less, preferably 0.4 mL/min·cm$^2$ or less, more preferably 0.040 mL/min·cm$^2$ or less, still more preferably 0.01 mL/min·cm$^2$ or less. The above range is advantageous particularly in using tobacco plants from the viewpoint of the average particle size of the unnecessary components contained in tobacco plants.

The temperature of the extract being supplied in the electrodialysis is not limited and can be, for example, 10°C to 40°C.

[Preparation Step]

The plant extract production method according to this embodiment may include a preparation step of preparing a plant dispersion before the extraction step. The plant dispersion may be prepared by any method and, for example, is prepared by adding, to a solvent, raw materials that may be contained in the plant dispersion other than the solvent, and stirring the obtained mixture until uniform.

[Concentration Step]

The plant extract production method according to this embodiment may include a concentration step of concentrating the plant extract obtained in the dialysis step. The concentration method is not limited and may be any known method. For example, the concentration method can be performed by using an evaporator or other equipment. To reduce the concentration time and improve efficiency, freeze concentration is preferably used, and the freeze concentration method is not limited and may be any known method.

Another embodiment of the present invention is the plant extract obtained by the production method described above. The plant extract according to this embodiment is characterized by less impurities having a particular size. In particular, the plant extract obtained under the conditions of the production method described above is advantageous in reducing the concentration of unnecessary components, such as components that generate components of concern, such as proteins of nitrate nitrogen, which is a precursor of tobacco-specific nitrosamines (TSNAs), and components that have no direct effect on flavors, such as proteins contained in many plants, such as RuBisCO. The plant extract obtained under the conditions of the production method described above is thus preferred when a tobacco plant is used as a plant.

The plant extract according to this embodiment is a tobacco extract containing 15 wt% or less of components with 50 Da (g/mol) or more and 50,000 Da or less.

From the viewpoint of ease of handling, the viscosity of the plant extract at 25°C is typically, but not necessarily, 1.0 mPa·s or more, preferably 0.5 mPa·s or more, and typically 15.0 mPa·s or less, preferably 6.5 mPa·s or less, more preferably 6.0 mPa·s or less, still more preferably 5.5 mPa·s or less. The viscosity can be measured by using, for example, a tuning fork vibration viscometer (SV-A available from AND Company, Limited).

The pH of the plant extract at 25°C in the case of using tobacco leaves as a plant is typically, but not necessarily, 7.5 or higher, preferably 8.0 or higher, more preferably 8.5 or higher, more preferably typically 9.0 or lower from the viewpoint of ease of use in tobacco products and oral pouch products.

The pH of the oral composition at a measurement temperature of 25°C can be measured by measuring a supernatant of a mixture of 2g of the oral composition with 20 ml of water by using a pH meter (e.g., available from HORIBA, Ltd.: LAQUA F-72 Flat ISFET pH electrode) after shaking the mixture for 10 minutes.

The pH meter is calibrated by, for example, 3-point calibration using a phthalate pH standard solution (pH 4.01), a neutral phosphate pH standard solution (pH 6.86), and a borate pH standard solution (pH 9.18) (all of the standard solutions are available from Wako Pure Chemical Corporation).

The plant extract obtained in the production method may be used in any application and can be used in a wide range of fields depending on the concentrated component. For example, when a tobacco plant is used as a plant, a plant extract having concentrated nicotine can be produced by the extraction, cross-flow filtration, and electrodialysis described above and can be used in, for example, the tobacco products and oral pouch products described below.

<Tobacco Product Production Method>

A tobacco product production method according to another embodiment of the present invention (hereinafter also referred to simply as a "tobacco product production method") is a method for producing a tobacco product having a mouthpiece portion and a tobacco rod portion in which wrapping paper is wrapped around a tobacco filling material, wherein the method includes: a step of adding a plant extract produced by the plant extract production method described above to at least one selected from the group consisting of the tobacco filling material and the wrapping paper.

The tobacco product production method according to this embodiment may be a known method except the step of adding the plant extract. In a known method, for example, the tobacco product can be produced by wrapping tipping paper around a tobacco rod portion and a mouthpiece portion.

The step of adding the plant extract is not limited as long as the step of adding the plant extract is provided at any stage at which the plant extract can be added to the tobacco filling material or/and the wrapping paper in the tobacco rod portion in the tobacco product production. For example, the plant extract may be added to the tobacco filling material or/and the wrapping paper before the wrapping paper is wrapped around the tobacco filling material, may be added to the tobacco filling material or/and the wrapping paper after wrapping, may be added after the tobacco rod portion is produced, or may be added after the tipping paper is wrapped around the tobacco rod portion and the mouthpiece portion.

The plant extract may be added to the tobacco filling material or/and the wrapping paper by any method. For example, the plant extract may be added dropwise to the tobacco filling material or/and the wrapping paper, the plant extract may be applied to the tobacco filling material or/and the wrapping paper, or the tobacco filling material or/and the wrapping paper may be immersed in the plant extract. The plant extract may be added after drying the residue obtained in tobacco plant extraction, and this residue may be used as a tobacco filling material. The residue may be an extraction residue obtained when a tobacco plant is used as a plant in the extraction step in the plant extract production. From such a reusable perspective, a tobacco plant is preferably used to produce a plant extract. The plant extract may be added by any method. Examples of the method include spraying and kneading in addition to dropwise addition, application, and immersion described above.

To ensure a sufficient amount of flavor component (e.g., nicotine), the amount of the plant extract added relative to 100 parts by weight of the tobacco rod portion is typically, but not necessarily, 0.5 parts by weight or more, preferably 10 part by weight or more, more preferably 2.0 parts by weight or more, still more preferably 5.0 parts by weight or more, and typically 20 parts by weight or less, preferably 15 parts by weight or less, more preferably 12.5 parts by weight or less, still more preferably 10 parts by weight or less.

When a plant extract is used in the tobacco product production method according to this embodiment, the type of plant is preferably, but not necessarily, for example, a tobacco plant because the tobacco plant can add a plant-derived flavoring agent component to a tobacco product and particularly allows control of the nicotine content.

The tobacco product produced in the tobacco product production method according to this embodiment may be used as a cigarette or a non-combustion-heating-type tobacco product. An example of the tobacco product will be described below, and each condition is particularly advantageous for a non-combustion-heating-type tobacco product.

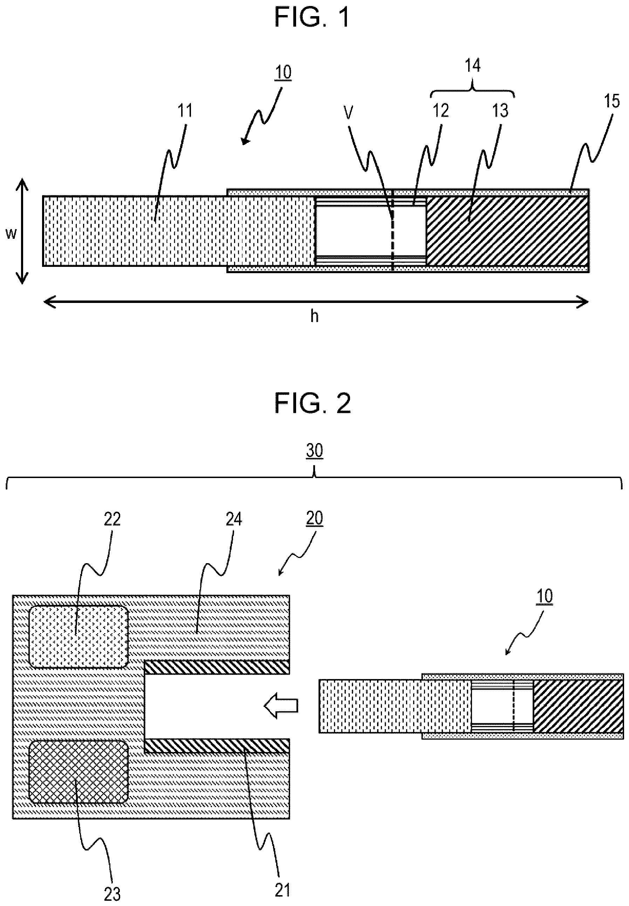

Fig. 1 illustrates an example of the tobacco product. The tobacco product will be described below with reference to Fig. 1.

A rod-shaped tobacco product 10 illustrated in Fig. 1 includes a tobacco rod portion 11, a mouthpiece portion 14, and tipping paper 15 wrapped around the tobacco rod portion 11 and the mouthpiece portion 14. The mouthpiece portion may have any structure. In Fig. 1, the mouthpiece portion includes a cooling segment 12 and a filter segment 13 containing a filter element. The cooling segment 12 is adjacent to and sandwiched between the tobacco rod portion 11 and the filter segment 13 in the axial direction (also referred to as a "longitudinal direction") of the tobacco product 10, and the cooling segment 12 has perforations V concentrically arranged in the circumferential direction. The perforations V usually promote the inflow of air from outside caused by user inhalation, and the inflow of air can lower the temperature of components and air flowing in from the tobacco rod portion 11.

In the tobacco product 10, the components generated by heating the tobacco rod portion 11 and other elements pass through the mouthpiece portion to reach the inside of the user's mouth. Examples of the components generated by heating include flavor components derived from flavoring agents, nicotine and tar derived from tobacco leaves, and aerosol components derived from aerosol-source materials. In this description, the aerosol-source material is a source material for generating an aerosol.

The tobacco product 10 preferably has a pillar shape that satisfies an aspect ratio, which is defined as below, of 1 or more.

$$\text{Aspect ratio} = h/w$$

w is the width of the bottom of the pillar-shaped body (the width of the bottom on the tobacco rod portion side in this description), h is the height, and preferably $h \geq w$. In this description, the direction indicated by h is defined as the longitudinal direction. Even if $w \geq h$, the direction indicated by h is therefore referred to as the longitudinal direction for convenience. The bottom may have any shape and may have a shape, such as polygon, rounded polygon, circle, or ellipse. The width w is a diameter when the bottom is circular, a major axis when the bottom is elliptical, or the diameter of the circumscribed circle or the major axis of the circumscribed ellipse when the bottom is polygonal or rounded-polygonal.

The length h of the tobacco product 10 in the longitudinal direction is typically, but not necessarily, for example, 40 mm or more, preferably 45 mm or more, more preferably 50 mm or more. The length h is typically 100 mm or less, preferably 90 mm or less, more preferably 80 mm or less.

The width w of the bottom of the pillar-shaped body of the tobacco product 10 is typically, but not necessarily, for example, 5 mm or more, preferably 5.5 mm or more. The width w is typically 10 mm or less, preferably 9 mm or less, more preferably 8 mm or less.

The ratio (cooling segment: filter segment) of the length of the cooling segment to the length of the filter segment in the length of the tobacco product in the longitudinal direction is typically, but not necessarily, 0.60:1.40 to 1.40:0.60, 0.80 to 1.20:0.80 to 1.20, preferably 0.85 to 1.15:0.85 to 1.15, more preferably 0.90 to 1.10:0.90 to 1.10, still more preferably 0.95 to 1.05:0.95 to 1.05, from the viewpoint of the delivery amount of the flavoring agent.

When the ratio of the length of the cooling segment to the length of the filter segment is in the above range, it is possible to provide a good flavor by well-balancing the cooling effect, the effect of reducing losses due to attachment of generated steam and aerosol to the inner wall of the cooling segment, and the filter function of adjusting the air volume and the flavor. In particular, when the cooling segment is long, aerosol generation and other particle formation are accelerated to provide a good flavor. However, if the cooling segment is too long, the substances passing through the cooling segment are attached to the inner wall.

From the viewpoint of ease of smoking, the ventilation resistance per tobacco product 10 in the longitudinal direction is typically, but not necessarily, 8 mmH$_2$O or more, preferably 10 mmH$_2$O or more, more preferably 12 mmH$_2$O or more, and typically 100 mmH$_2$O or less, preferably 80 mmH$_2$O or less, more preferably 60 mmH$_2$O or less.

The ventilation resistance is measured by using, for example, a filter ventilation resistance meter available from Cerulean in conformity with an ISO standard method (ISO 6565:2015). The ventilation resistance refers to a difference in pressure between one end surface (first end surface) and the other end surface (second end surface) when air is passed at a predetermined air flow rate (17.5 cc/min) from the first end surface to the second end surface while no air permeation occurs in the side surface of the tobacco product 10. The unit is typically expressed in mmH$_2$O. The ventilation resistance is known to be proportional to the length of the tobacco product when the tobacco product has a length in a normal range (5 mm to 200 mm long). If the length doubles, the ventilation resistance of the tobacco product will double.

[Mouthpiece Portion]

The mouthpiece portion 14 may have any structure. For example, as illustrated in Fig. 1, the mouthpiece portion 14 may include the cooling segment 12 and the filter segment 13 containing the filter element. The cooling segment 12 is adjacent to and sandwiched between the tobacco rod portion 11 and the filter segment 13 in the axial direction of the tobacco product 10. The filter segment 13 and the cooling segment 12 will be described below in detail.

(Filter Segment)

The filter segment 13 is not limited as long as the filter segment 13 has typical filter functions The filter segment 13 may be made by, for example, processing a material, such as synthetic fiber tow (hereinafter also referred to simply as a "tow") or paper, into a columnar shape. Examples of the typical filter functions include control of the amount of air mixed during inhalation of an aerosol and other materials, flavor reduction, and nicotine and tar reduction. The filter segment 13 does not necessarily have all of these functions In electric heating tobacco products, which tend to generate less components and tend to have a lower packing ratio of the tobacco filling material than cigarette products, one of important functions of the filter segment 13 is to prevent the tobacco filling material from falling off while suppressing the filtration function.

The filter segment 13 may have any shape and may have a known shape. The filter segment 13 typically has a columnar shape and may have the following structure.

The filter segment 13 may have a section, such as a recess or a cavity (e.g., center hole) forming a hollow (void) in the circumferential cross section.

The circumferential cross section of the filter segment 13 is substantially circular, and the diameter of the circle may be appropriately changed according to the size of the product. The diameter of the circle is typically 4.0 mm or more and 9.0 mm or less, preferably 4.5 mm or more and 8.5 mm or less, more preferably 5.0 mm or more and 8.0 mm or less. If the cross section is not circular, the diameter of a circle having an area equal to the area of the cross section is used as the diameter

The circumference of the circumferential cross section of the filter segment 13 may be appropriately changed according to the size of the product and is typically 140 mm or more and 27.0 mm or less, preferably 15.0 mm or more and 26.0 mm or less, more preferably 16.0 mm or more and 25.0 mm or less.

The length of the filter segment 13 in the axial direction may be appropriately changed according to the size of the product and is typically 15 mm or more and 35 mm or less, preferably 17.5 mm or more and 32.5 mm or less, more preferably 20.0 mm or more and 30.0 mm or less.

The ventilation resistance per 120 mm of the filter segment 13 in the axial direction is typically, but not necessarily, 40 mmH$_2$O or more and 300 mmH$_2$O or less, preferably 70 mmH$_2$O or more and 280 mmH$_2$O or less, more preferably 90 mmH$_2$O or more and 260 mmH$_2$O or less.

The ventilation resistance of the filter segment 13 can be measured by the same method as the method for measuring the ventilation resistance of the tobacco product 10.

The filter segment 13 may have any form. The filter segment 13 may be, for example, a plain filter including a single filter segment, or a multi-segment filter including multiple filter segments, such as a dual filter or a triple filter. A multi-segment filter when used can include a filter segment containing a cooling agent according to an embodiment of the present invention and a filter segment containing a filter element.

The density of the filter element constituting the filter segment 13 is typically, but not necessarily, 0.10 g/cm$^3$ or more and 0.25 g/cm$^3$ or less, preferably 0.11 g/cm$^3$ or more and 0.24 g/cm$^3$ or less, more preferably 0.12 g/cm$^3$ or more and 0.23 g/cm$^3$ or less.

The filter element contained in the filter segment 13 may have any known form. The filter element may be made by, for example, processing a cellulose acetate tow into a columnar shape. The filament denier and total denier of the cellulose acetate tow are preferably, but not necessarily, 5 g/9000m or more and 12 g/9000m or less, and 12000 g/9000m or more and 35000 g/9000m or less, respectively, when the mouthpiece portion has a circumference of 22 mm. The cross section of the fiber of the cellulose acetate tow has, for example, a circular shape, an elliptical shape, a Y-shape, an I-shape, or a R-shape. In the case of a filter filled with a cellulose acetate tow, triacetin may be added in an amount of 5 wt% or more and 10 wt% or less relative to the weight of the cellulose acetate tow in order to improve the filter hardness. The acetate filter may be replaced by a paper filter filled with sheet-shaped pulp paper

The filter segment 13 can be produced by a known method. For example, when a synthetic fiber, such as a cellulose acetate tow, is used as a material of the filter element, the filter segment 13 can be produced by a method involving spinning a polymer solution containing a polymer and a solvent and crimping the obtained thread. This method may be, for example, a method described in International Publication No. WO 2013/067511.

The filter element may include a crushable additive release container (e.g., capsule) including a crushable shell made of gelatin or other materials. The capsule (also referred to as an "additive release container" in the art) may have any known form. The capsule may be a crushable additive release container including a crushable shell made of gelatin or other materials. In this case, the capsule releases a liquid or substance (typically a flavor) in the capsule when being crushed by a tobacco product user before use, during use, or after use. The liquid or substance is then transferred to tobacco smoke during use of the tobacco product and transferred to the surrounding environment after use.

The capsule may have any form and may be, for example, an easily breakable capsule. The capsule preferably has a spherical shape. The capsule may contain any of the additives described above. In particular, a flavor and activated carbon are preferably contained in the capsule. One or more materials that help smoke filtration may be added as additives. The additives may have any form, and are typically liquid or solid. The use of a capsule containing additives is well known in the art. An easily breakable capsule and the method for producing the easily breakable capsule are well known in the art.

Examples of the flavor include menthol, spearmint, peppermint, fenugreek, or clove, and medium chain triglycerides (MCTs). The flavor is menthol, or may be menthol or other substances or a combination of these.

To improve the strength and the structural rigidity, the filter segment 13 may include roll paper (filter plug roll paper) wrapped around the filter material described above. The roll paper may have any form and may include a joint including one or more rows of adhesive. The adhesive may contain a hot-melt adhesive, and the hot-melt adhesive may contain polyvinyl alcohol. When the filter is composed of two or more segments, the roll paper is preferably wrapped around all of these two or more segments.

The roll paper may be made of any known material, and the material of the roll paper may contain a filler, such as calcium carbonate.

The thickness of the roll paper is typically, but not necessarily, 20 $\mu$m or more and 140 $\mu$m or less, preferably 30 $\mu$m or more and 130 $\mu$m or less, more preferably 30 $\mu$m or more and 120 $\mu$m or less.

The basis weight of the roll paper is typically, but not necessarily, 20 gsm or more and 100 gsm or less, preferably 22 gsm or more and 95 gsm or less, more preferably 23 gsm or more and 90 gsm or less.

The roll paper is not necessarily coated, but preferably coated with a desired material in order to provide a function other than strength and structural rigidity.

The filter segment 13 may further include a center hole segment having one or more hollow portions. The center hole segment is typically disposed closer to the cooling segment than the filter element, preferably disposed adjacent to the cooling segment.

(Cooling Segment)

The cooling segment 12 is adjacent to and sandwiched between the tobacco rod portion and the filter segment. The cooling segment 12 is typically a rod-shaped member having a cavity forming a hollow (void) in the circumferential cross section of a cylinder or other shapes.

The length of the cooling segment 12 in the longitudinal direction may be appropriately changed according to the size of the product and is typically 20 mm or more, preferably 26 mm or more, more preferably 28 mm or more, still more preferably 32 mm or more, and typically 40 mm or less, preferably 32 mm or less, more preferably 28 mm or less, still more preferably 26 mm or less. When the length of the cooling segment in the longitudinal direction is greater than or equal to the lower limit described above, it is possible to ensure an adequate cooling effect and provide a good flavor. When the length of the cooling segment in the longitudinal direction is less than or equal to the upper limit described above, it is possible to reduce losses due to attachment of generated steam and aerosol to the inner wall of the cooling segment.

The circumference of the circumferential cross section of the cooling segment 12 may be appropriately changed according to the size of the product and is typically 15 mm or more and 30 mm or less, preferably 18 mm or more and 24 mm or less, more preferably 20 mm or more and 22.5 mm or less.

Referring to Fig. 1, the cooling segment 12 may have perforations V (also referred to as a "ventilation filter (Vf)" in the art) concentrically arranged in the circumferential direction.

The presence of the perforations V allows air to flow into the cooling section from the outside during use and can thus lower the temperature of components and air flowing in from the tobacco rod portion. When the cooling segment is positioned in a region of 4 mm or more from the boundary between the cooling segment and the filter segment in the direction from the boundary to the cooling segment side, it is possible to not only improve the cooling capacity but also prevent residence of thermally generated components in the cooling segment to improve the component delivery amount.

In the case of using an aerosol-source material in the tobacco rod portion, the steam containing an aerosol-source material and a tobacco flavor component generated by heating the tobacco rod portion becomes liquid when the steam comes into contact with air from outside and decreases in temperature, which can accelerate generation of an aerosol.

The diameter of the perforations V is typically, but not necessarily, 100 $\mu$m or more and 1000 $\mu$m or less, preferably 300 $\mu$m or more and 800 $\mu$m or less. The perforations are preferably substantially circular or substantially elliptical. When the perforations are substantially elliptical, the diameter represents the major axis.

[Tobacco Rod Portion]

The tobacco rod portion 11 may have any known form. The tobacco rod portion 11 is typically formed by wrapping the wrapping paper around the tobacco filling material. The tobacco filling material is not limited and may be a known material, such as shredded tobacco or reconstituted tobacco sheets. The tobacco filling material may contain an aerosol-source material. The aerosol-source material is a source material that generates an aerosol when heated. Examples of the aerosol-source material include glycerine, propylene glycol, triacetin, 1,3-butanediol, and mixtures thereof.

The amount of the aerosol-source material in the tobacco filling material is typically, but not necessarily, 5 wt% or more, preferably 10 wt% or more, and typically 50 wt% or less, preferably 15 wt% or more and 25 wt% or less relative to the total weight of the tobacco filling material in order to generate a sufficient amount of aerosol and impart a good flavor.

The tobacco rod portion 11 may have a fitting portion between the tobacco rod portion 11 and a heater member for heating the tobacco product 10, or other members.

The tobacco rod portion 11 formed by wrapping the wrapping paper around the tobacco filling material preferably has a pillar shape. In this case, the aspect ratio represented by the height of the tobacco rod portion 11 in the longitudinal direction relative to the width of the bottom of the tobacco rod portion 11 is preferably 1 or more.

The bottom may have any shape and may have a shape, such as polygon, rounded polygon, circle, or ellipse. The width is a diameter when the bottom is circular, a major axis when the bottom is elliptical, or the diameter of the circumscribed circle or the major axis of the circumscribed ellipse when the bottom is polygonal or rounded-polygonal. The tobacco filling material constituting the tobacco rod portion 11 preferably has a height of about 10 to 70 mm and a width of about 4 to 9 mm.

The length of the tobacco rod portion 11 in the longitudinal direction may be appropriately changed according to the size of the product and is typically 10 mm or more, preferably 12 mm or more, more preferably 15 mm or more, still more preferably 18 mm or more, and typically 70 mm or less, preferably 50 mm or less, more preferably 30 mm or less, still more preferably 25 mm or less. To well-balance the delivery amount and the aerosol temperature, the ratio of the length of the tobacco rod portion 11 to the length h of the tobacco product 10 in the longitudinal direction is typically 10% or more, preferably 20% or more, more preferably 25% or more, still more preferably 30% or more, and typically 60% or less, preferably 50% or less, more preferably 45% or less, still more preferably 40% or less.

(Wrapping Paper)

The composition of the wrapping paper is not limited and may have a general form. For example, the wrapping paper may contain pulp as a main component. The pulp may be wood pulp, such as softwood pulp or hardwood pulp, or may be produced by blending non-wood pulp commonly used in wrapping paper for tobacco products, such as flax pulp, hemp pulp, sisal pulp, or esparto.

The type of pulp may be chemical pulp, ground pulp, chemiground pulp, thermomechanical pulp, or other pulps made by kraft cooking, acid/neutral/alkaline sulfite cooking, soda salt cooking, or other methods.

The wrapping paper is produced by conditioning and homogenizing the texture of the pulp in the papermaking process using a fourdrinier paper machine, a cylinder paper machine, a cylinder-short combined paper machine, or other machines. If necessary, a wet-strength agent may be added to impart water resistance to the wrapping paper, or a sizing agent may be added to adjust the printing conditions for the wrapping paper. In addition, internal aids for papermaking, such as aluminum sulfate, various anionic, cationic, nonionic, or amphoteric yield enhancers, freeness improvers, and paper-strength agents, and additives for paper manufacturing, such as dyes, pH adjusters, antifoaming agents, pitch control agents, and slime control agents, can be added.

The basis weight of the base paper of the wrapping paper is, for example, typically 20 gsm or more, preferably 25 gsm or more. The basis weight is typically 65 gsm or less, preferably 50 gsm or less, still more preferably 45 gsm or less.

The thickness of the wrapping paper having the features described above is typically, but not necessarily, 10 $\mu$m or more, preferably 20 $\mu$m or more, more preferably 30 $\mu$m or more, and typically 100 $\mu$m or less, preferably 75 $\mu$m or less, more preferably 50 $\mu$m or less, from the viewpoint of rigidity, air permeability, and ease of adjustment in paper manufacturing.

Examples of the shape of the wrapping paper of the tobacco product include square and rectangle.

When the wrapping paper is used to be wrapped around the tobacco filling material (to be used to produce the tobacco rod portion), the length of one side of the wrapping paper is, for example, about 12 to 70 mm, and the length of the other side is, for example, 15 to 28 mm, preferably 22 to 24 mm, more preferably about 23 mm. To wrap the wrapping paper around the tobacco filling material in a pillar shape, for example, one end portion of the wrapping paper is overlaid with the other end portion of the wrapping paper in the w-direction by about 2 mm, and glued to the other end portion to form a pillar-shaped paper tube, and the pillar-shaped paper tube is filled with the tobacco filling material. The size of the wrapping paper having a rectangular shape can be determined according to the size of the finished tobacco rod portion 11.

When, like tipping paper, the wrapping paper connects the tobacco rod portion 11 to a different member adjacent to the tobacco rod portion 11 such that the wrapping paper is wrapped around the tobacco rod portion 11 and the different member, the length of one side of the wrapping paper is, for example, 20 to 60 mm, and the length of the other side is, for example, 15 to 28 mm.

The wrapping paper may contain a filler in addition to the pulp described above. The filler content relative to the total weight of the wrapping paper is, for example, 10 wt% or more and less than 60 wt%, preferably 15 wt% or more and 45 wt% or less.

The wrapping paper in a suitable basis weight range (25 gsm or more and 45 gsm or less) preferably contains 15 wt% or more and 45 wt% or less of the filler.

When the basis weight is 25 gsm or more and 35 gsm or less, the filler is preferably 15 wt% or more and 45 wt% or less. When the basis weight is more than 35 gsm and 45 gsm or less, the filler is preferably 25 wt% or more and 45 wt% or less.

The filler may be, for example, calcium carbonate, titanium dioxide, or kaolin, and preferably calcium carbonate in order to, for example, enhance flavor and whiteness.

The wrapping paper may contain various aids in addition to the base paper and the filler. For example, the wrapping paper may contain a water resistance improver to improve water resistance. Examples of the water resistance improver include wet-strength agents (WS agents) and sizing agents. Examples of wet-strength agents include urea formaldehyde resin, melamine formaldehyde resin, and polyamide epichlorohydrin (PAE). Examples of sizing agents include rosin soap, alkyl ketene dimers (AKDs), alkenyl succinic anhydrides (ASAs), and highly saponified polyvinyl alcohol with degree of saponification of 90% or more.

A paper strength agent may be added as an aid. Examples of the paper strength agent include polyacrylamide, cationic starch, oxidized starch, CMC, polyamide-epichlorohydrin resin, and polyvinyl alcohol. In particular, oxidized starch is known to improve air permeability when used in a very small amount (Japanese Unexamined Patent Application Publication No. 2017-218699).

The wrapping paper may be appropriately coated.

[Tipping Paper]

The composition of the tipping paper 15 is not limited and may have a general form. For example, the tipping paper 15 may contain pulp as a main component. The pulp may be wood pulp, such as softwood pulp or hardwood pulp, or may be produced by blending non-wood pulp commonly used in wrapping paper for tobacco articles, such as flax pulp, hemp pulp, sisal pulp, or esparto. These types of pulp may be used singly or may be used in combination of two or more at any ratio.

The tipping paper 15 may be composed of one sheet or two or more sheets.

The form of pulp may be chemical pulp, ground pulp, chemiground pulp, thermomechanical pulp, or other pulps made by kraft cooking, acid/neutral/alkaline sulfite cooking, soda salt cooking, or other methods.

The tipping paper 15 may be produced by the production method described below or may be a commercial product.

The tipping paper 15 may have any shape, and may be, for example, square or rectangle.

The basis weight of the tipping paper 15 is typically, but not necessarily, 32 gsm or more and 40 gsm or less, preferably 33 gsm or more and 39 gsm or less, more preferably 34 gsm or more and 38 gsm or less.

The thickness of the tipping paper 15 is typically, but not necessarily, 20 $\mu$m or more and 140 $\mu$m or less, preferably 30 $\mu$m or more and 130 $\mu$m or less, more preferably 30 $\mu$m or more and 120 $\mu$m or less.

The air permeability of the tipping paper 15 is typically, but not necessarily, 0 CORESTA units or more and 30000 CORESTA units or less, preferably more than 0 CORESTA units and 10000 CORESTA units or less. The air permeability in this description is a value measured in conformity with ISO 2965: 2009 and expressed by the flow rate ($cm^3$) of gas passing through an area of 1 $cm^2$ per minute when a difference in pressure between both sides of paper is 1 kPa. One CORESTA unit (1 C.U.) is $cm^3/(min \cdot cm^2)$ at 1 kPa.

The tipping paper 15 may contain a filler in addition to the pulp described above. Examples of the filler include metal carbonates, such as calcium carbonate and magnesium carbonate; metal oxides, such as titanium oxide, titanium dioxide, and aluminum oxide; metal sulfates, such as barium sulfate and calcium sulfate; metal sulfides, such as zinc sulfide; and quartz, kaolin, talc, diatomaceous earth, and gypsum. In particular, calcium carbonate is preferably contained in order to improve whiteness and opacity and increase the heating speed. These fillers may be used singly or in combination of two or more.

The tipping paper 15 may contain various aids in addition to the pulp and the filler described above. For example, the tipping paper 15 may contain a water resistance improver to improve water resistance. Examples of the water resistance improver include wet-strength agents (WS agents) and sizing agents. Examples of wet-strength agents include urea formaldehyde resin, melamine formaldehyde resin, and polyamide epichlorohydrin (PAE). Examples of sizing agents include rosin soap, alkyl ketene dimers (AKDs), alkenyl succinic anhydrides (ASAs), and highly saponified polyvinyl alcohol with degree of saponification of 90% or more

A coating agent may be applied to at least one of two sides, the front side and the back side, of the tipping paper 15. The coating agent is preferably, but not necessarily, a coating agent that can form a film on the front side of the paper to reduce liquid permeability.

<Electric Heating Tobacco Product Production Method>

An electric heating tobacco product production method according to another embodiment of the present invention (hereinafter also referred to simply as an "electric heating tobacco product production method") includes: an electric heating device that includes a heater member, a battery unit that serves as an electric power source of the heater member, and a control unit for controlling the heater member; and a tobacco product to be inserted into the heater member so as to come into contact with the heater member, wherein the tobacco product is produced by the tobacco product production method described above.

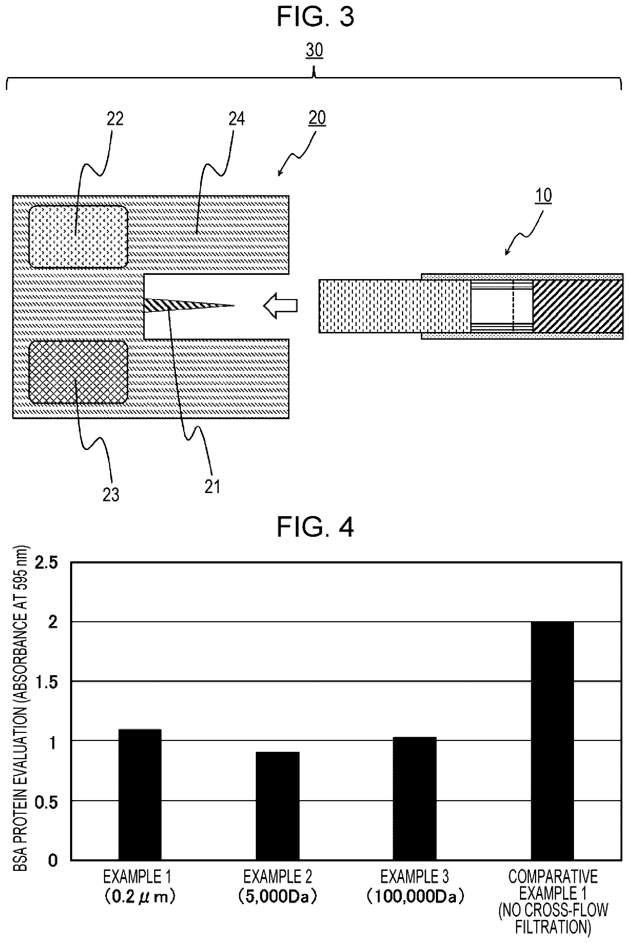

The electric heating tobacco product may have a feature as illustrated in Fig. 2 where the tobacco product 10 is heated from the outer circumferential surface. The electric heating tobacco product may have a feature as illustrated in Fig. 3 where the tobacco product 10 is heated from the inside of the tobacco rod portion 11. Electric heating devices 20 illustrated in Fig. 2 and Fig. 3 each have an air inlet, which is not illustrated in the figures. An electric heating tobacco product 30 will be described below with reference to Fig. 3. In the tobacco products 10 in Figs. 2 and 3, some of the reference signs representing the components shown in Fig. 1 are omitted.

In the electric heating tobacco product 30, the tobacco product 10 described above is inserted into a heater member 21, which is disposed inside the electric heating device 20, so as to come into contact with the heater member 21 when used.

The electric heating device 20 includes, for example, a battery unit 22 and a control unit 23 inside a resin body 24.

When the tobacco product 10 is inserted into the electric heating device 20, the outer circumferential surface of the tobacco rod portion 11 comes into contact with the heater member 21 of the electric heating device 20, and then the entire outer circumferential surface of the tobacco rod portion 11 and part of the outer circumferential surface of the tipping paper come into contact with the heater member 21.

The heater member 21 of the electric heating device 20 produces heat under control of the control unit 23. The heat is transferred to the tobacco rod portion 11 of the tobacco product 10 to volatilize the aerosol-source material, the flavor component, and other components contained in the tobacco filling material in the tobacco rod portion 11.

The heater member 21 may be, for example, a sheet-shaped heater, a plate-shaped heater, or a cylindrical heater. The sheet-shaped heater is a sheet-shaped flexible heater. Examples of the sheet-shaped flexible heater include a heater including a film (about 20 to 225 $\mu$m thick) made of a heat-resistant polymer, such as polyimide. The plate-shaped heater is a plate-shaped rigid heater (about 200 to 500 $\mu$m thick). Examples of the plate-shaped rigid heater include a heater having a resistance circuit, which serves as a heat-generating portion, on a plate substrate. The cylindrical heater is a cylindrical hollow or solid heater (about 200 to 500 $\mu$m thick). Examples of the cylindrical heater include a heater having a resistance circuit, which serves as a heat-generating portion, on the outer circumferential surface of a cylinder made of a metal or other materials. Examples of the cylindrical heater further include a rod-shaped heater or conical heater having a resistance circuit, which serves as a heat-generating portion, therein and made of a metal or other materials. The cross section of the cylindrical heater may be circular, elliptical, polygonal, rounded-polygonal, or other shapes. The heater member 21 may be an inductor, and the tobacco rod portion 11 may have therein a susceptor for heating the tobacco filling material or other materials. In this configuration, the tobacco filling material or other materials can be heated by the control unit 23 supplying electric power to the inductor to heat the susceptor by means of induction heating. The heater member 21 may be a microwave generator. In this configuration, the control unit 23 causes electric power to be supplied to the microwave generator to heat the tobacco filling material or other materials in the tobacco rod portion 11 by means of microwave heating.

In the case of heating the tobacco product 10 from the outer circumferential surface as illustrated in Fig. 2, the sheet-shaped heater, the plate-shaped heater, or the cylindrical heater described above can be used. In the case of heating the tobacco product 10 from the inside of the tobacco rod portion 11 as illustrated in Fig. 3, the plate-shaped heater described above, the pillar-shaped heater, and the conical heater described above can be used.

The length of the heater member 21 in the longitudinal direction can be in the range of L mm $\pm$ 5.0 mm, where L mm is the length of the tobacco rod portion 11 in the longitudinal direction. To transfer sufficient heat to the tobacco rod portion 11 to adequately volatilize the aerosol-source material, the flavor component, and other components contained in the tobacco filling material, that is, from the viewpoint of aerosol delivery, the length of the heater member 21 in the longitudinal direction is preferably L mm or more. To prevent or reduce generation of components that have an undesirable effect on the flavor or other characteristics, the length of the heater member 21 in the longitudinal direction is preferably L mm + 0.5 mm or less, L mm + 1.0 mm or less, L mm + 1.5 mm or less, L mm + 2.0 mm or less, L mm + 2.5 mm or less, L mm + 3.0 mm or less, L mm + 3.5 mm or less, L mm + 4.0 mm or less, L mm + 4.5 mm or less, or L mm + 5.0 mm or less.

The heating intensity, such as heating time or heating temperature, at which the tobacco product 10 is heated by the heater member 21 can be set in advance for each electric heating tobacco product 30. For example, the hating intensity can be set in advance as follows: after the tobacco product 10 is inserted into the electric heating device 20, the tobacco product 10 is preheated for a certain time until the outer circumferential surface of a portion inserted in the electric heating device 20 reaches a temperature of X (°C), and the temperature is then kept at a certain temperature of X (°C) or lower.

The X (°C) is preferably 80°C or higher and 400°C or lower from the viewpoint of the delivery amount of thermally generated components or other components. Specifically, the X (°C) can be 80°C, 90°C, 100°C, 110°C, 120°C, 130°C, 140°C, 150°C, 160°C, 170°C, 180°C, 190°C, 200°C, 210°C, 220°C, 230°C, 240°C, 250°C, 260°C, 270°C, 280°C, 290°C, 300°C, 310°C, 320°C, 330°C, 340°C, 350°C, 360°C, 370°C, 380°C, 390°C, or 400°C.

The steam containing aerosol-source material-derived components, flavor component-derived components, and other components generated from the tobacco rod portion 11 heated by the heater member 21 passes through the mouthpiece portion 14 including the cooling segment 12, the filter segment 13, and other elements to reach the inside of the user's oral cavity.

To promote the inflow of air from outside and prevent or reduce residence of thermally generated components and air in the cooling segment 12, the perforations V in the cooling segment 12 are preferably present on the mouthpiece end side from a mouthpiece end-side end portion of a region of the cooling segment 12 that will come into contact with the electric heating device 20. The insertion port of the electric heating device 20 from which the tobacco product 10 is inserted may be tapered in order to facilitate insertion of the tobacco product 10.

<Oral Pouch Product Production Method>

A method for producing an oral pouch product according to another embodiment of the present invention (hereinafter also referred to simply as an "oral pouch product production method") is a method for producing an oral pouch product including an oral composition and a pouch that encloses the oral composition, wherein the method includes

a step of adding, to the oral composition, a plant extract produced by the plant extract production method described above.

The step of adding the plant extract is not limited as long as the step of adding the plant extract is provided at any stage at which the plant extract can be added to the oral composition in the oral pouch product production. For example, the plant extract may be added together with other raw materials, or the plant extract may be added to the produced oral composition in the production of the oral composition in the oral composition production step describe below. Alternatively, the plant extract may be added to the oral composition through a packaging material after the oral composition is enclosed in the packaging material in an enclosing step described below. Alternatively, the plant extract may be added to a dried material of the residue obtained in tobacco plant extraction, and the residue may be contained in the oral composition. The residue may be an extraction residue obtained when a tobacco plant is used as a plant in the extraction step in the plant extract production. From such a reusable perspective, a tobacco plant is preferably used to produce a plant extract. When the plant extract is added to the dried residue, a flavoring agent and a pH adjuster, and if desired, other components, such as an emulsifier, are added together with the plant extract to prepare an oral composition, and the oral composition is then enclosed in a pouch to prepare an oral pouch product.

When a plant extract is used in the oral pouch product production method according to this embodiment, the type of plant is preferably, but not necessarily, for example, a tobacco plant because the tobacco plant can add a plant-derived flavoring agent component to the oral pouch product and allows control of the nicotine content particularly in smokeless tobacco products. In the case of smokeless tobacco products, addition of nicotine to oral pouch products may involve adding a plant extract obtained by using a tobacco plant as a plant, may involve adding a nicotine component as described below, or may involve using both of these methods. From the viewpoint of control of the nicotine content and ease of handling, nicotine is preferably added as a plant extract obtained by using at least a tobacco plant as a plant.

To ensure a sufficient amount of flavor component (e.g., nicotine), the amount of the plant extract added relative to 100 parts by weight of the oral composition is typically, but not necessarily, 0.1 parts by weight or more, preferably 1 part by weight or more, more preferably 3 parts by weight or more, still more preferably 5 parts by weight or more, yet still more preferably 10 parts by weight or more, and typically 50 parts by weight or less, preferably 40 parts by weight or less, more preferably 35 parts by weight or less, still more preferably 20 parts by weight or less.

The oral pouch product production method according to this embodiment may be a known method except the step of adding the plant extract. The production step other than the step of adding the plant extract may include, for example, an oral composition production step and an enclosing step described below.

[Oral Composition Production Step]

The oral pouch product production method may include an oral composition production step. An example of the oral composition production method will be described below. The following raw materials may be raw materials describe below.

First, a nicotine source, an optional base material, and other materials are mixed to form a mixture. As desired, water addition and heating may be performed.

Next, a flavoring agent and a moisturizer, which are optional components, are added and further mixed with stirring to form a mixture. It is noted that acid may be added after mixing with stirring.

The mixture is preferably subjected to pH adjustment, and the amount of the phosphate described above or another pH adjuster added is preferably adjusted such that the mixture becomes acidic. Specifically, the pH of the mixture is preferably 2.0 or higher and 6.0 or lower, more preferably 2.5 or higher and 5.0 or lower

By adjusting the pH of the oral composition to 6.0 or lower, the flavor component (e.g., nicotine) contained in the mixture can be maintained in a stable state.

The unheated mixture described above may be heated as desired.

After preparing the mixture, the mixture may be dried (drying step). Subsequently, the mixture may be cooled. The mixture may be cooled by natural cooling or by any other cooling means (cooling step). For example, the water content in the mixture can be adjusted by drying to a desired content between 5 and 55 wt%. It is thus easy to adjust the water content in an intended oral composition.

An aqueous solution containing a pH adjuster may be further added to the mixture obtained in the above step (or the drying step, the cooling step) to adjust the pH at a measurement temperature of 25°C to preferably 7 to 10, more preferably 7.5 to 9.5, still more preferably 8 to 9.

Furthermore, a sweetener, such as acesulfame potassium, a flavoring agent, such as menthol, a bitterness inhibitor, such as soy lecithin, and a moisturizer, such as glycerine, are added (additive addition step) as appropriate to produce a desired oral composition.

The above additives and other substances may be added in the form of solid or may be dissoved in water and added as an aqueous solution. When the additives and other substances are added as an aqueous solution, the additives and other substances may be dissolved in a predetermined amount of water and added so as to obtain the final water content of the pouch product.

[Enclosing Step]

The oral composition obtained in the oral composition preparation step is enclosed in a packaging material to produce a pouch product (enclosing step). The enclosing method is not limited and may be any known method, such as a method in which the oral composition is placed in a bag-shaped nonwoven fabric and then the bag-shaped nonwoven fabric is sealed.

In the enclosing step, water may be further added (water adding step) to obtain an oral composition having a desired water content after sealing the packaging material after placing the oral composition in the packaging material. For example, when an intended oral composition has a water content of 50 wt%, and the oral composition obtained in the oral composition preparation step has a water content of 15 wt%, the remaining 35 wt% of water is added.

An example of the oral pouch product will be described below.

The oral pouch product includes, for example, an oral composition containing a base material, and a pouch that encloses the oral composition.

[Oral Composition]

The formulation of the oral composition is not limited as long as the oral composition contains at least the base material. The oral composition in this embodiment is a general term for any of substances contained in the pouch. To prevent leakage of the oral composition to the outside of the pouch, the oral composition is preferably non-liquid, and preferably includes, for example, solid or gel-like substances or a mixture of these.

(Base Material)

The oral composition contains the base material. Examples of the type of base material include, but are not limited to, polysaccharides that can absorb and retain water, and porous structures. Specifically, the base material is preferably at least one selected from the group consisting of cellulose, microcrystalline cellulose (MCC), spherical cellulose, and porous cellulose, and more preferably cellulose because cellulose provides a high degree of freedom in adjusting the bulk density of the oral composition and exhibits white color. These substances may be used singly or may be used in any combination of two or more at any ratio.

To prevent or reduce elution of water during production or during product storage to improve quality and to enhance the whiteness of the product to provide an appearance suitable for users, the amount of the base material in the oral composition is typically, but not necessarily, 50 wt% or more, preferably 53 wt% or more, more preferably 55 wt% or more. The maximum amount of the base material is typically, but not necessarily, 70 wt% or less, preferably 68 wt% or less, more preferably 65 wt% or less, from the viewpoint of the limit at which other raw materials can be blended.

(Nicotine)

When the oral pouch product is used as smokeless tobacco or other products, the oral composition may contain nicotine, and nicotine may be contained in any form. Nicotine may be added by addition of a plant extract obtained by using a tobacco plant as a plant, but instead of or in addition to this, nicotine may be added to the oral composition by a method other than addition of a plant extract. The form of nicotine added by a method other than addition of a plant extract is not limited. For example, nicotine may be added by using tobacco leaves, a tobacco leaf-processed product, or an extract of a nicotine-containing material, such as tobacco leaves, nicotine may be added as a compound, or added as a nicotine-carrying material, such as a nicotine salt or stabilized nicotine (e.g., nicotine carried on an ion exchange resin) may be added.

Examples of the nicotine-carrying material include a material having nicotine carried on an ion exchange resin as described above. When nicotine is carried on an ion exchange resin, the ion exchange resin is used as a carrier. Examples of the ion exchange resin include weakly acidic cation exchange resins. The ion exchange resin on which nicotine is carried (hereinafter also referred to simply as a "nicotine-carrying resin") may be, for example, a resin complex containing 10 wt% or more and 20 wt% or less of nicotine, and the resin complex is called Nicotine polacrilex. The ion exchange resin used in Nicotine polacrilex is a weakly acidic cation exchange resin.

When a tobacco leaf-processed product is used as a nicotine source, the processed product is, for example, tobacco powder made by grinding tobacco leaves.

The tobacco powder may contain, for example, shredded lamina, fine powder, or fibers of dry tobacco leaves and can be prepared by the method described below. In this description, tobacco leaves may include mesophyll (lamina), leaf veins (stem), and roots. The tobacco filling material may basically include elements derived from midribs and roots of tobacco leaves, in addition to tobacco powder made from lamina of tobacco leaves.

The tobacco powder may have any particle size. To provide good texture in the oral cavity to improve comfort during use and to enhance release of inhaling flavor components contained in the tobacco powder into the oral cavity, the tobacco powder preferably passes through a mesh of 1.2 mm, more preferably passes through a mesh of 1.0 mm.

Examples of the type of tobacco, which is a raw material of the tobacco powder, include, but are not limited to, the genus Nicotiana, such as flue-cured tobacco, such as Nicotiana Tabacum, Burley tobacco, and Brasilia tobacco, such as Nicotiana rustica.

The tobacco powder is preferably prepared as described below. First, a base is added to tobacco powder prepared by grinding tobacco leaves, and the base and the tobacco powder are mixed. The base added is, for example, potassium carbonate and/or sodium carbonate and preferably added as an aqueous solution. A pH adjuster, such as sodium dihydrogen phosphate, may be added. The mixture after addition of the base is preferably adjusted to pH 8.0 to 9.0.

The tobacco powder content in this mixture is, for example, 60 to 90 wt%.

After addition of the base, the mixture is preferably heated to, for example, a product temperature of 65 to 90°C, preferably a product temperature of 70 to 80°C, for example, for 0.5 to 3 hours, preferably 0.8 to 2 hours. This process sterilizes the tobacco powder.

The heating may be performed either by steam injection or by using a jacket, or by both of these methods.

The mixture after heating preferably has a pH of 8.0 to 9.0, and preferably has a water content of 10 to 50 wt%.

After heating, the obtained treated tobacco powder is dried by performing heating only with the jacket while stopping steam injection as desired.

Subsequently, the tobacco powder may be cooled at about 15 to 25°C for about 1 hour.

In the case of using a tobacco material containing tobacco powder, the amount of the tobacco material containing tobacco powder added relative to the oral composition is typically 0.001 wt% or more, preferably 0.01 wt% or more, more preferably 0.05 wt% or more. From the viewpoint of the taste of the oral composition, the amount of the tobacco material containing tobacco powder added relative to the oral composition is typically 90 wt% or less, preferably 80 wt% or less, more preferably 70 wt% or less. The amount of the tobacco material containing tobacco powder added relative to the oral composition may be 45 wt% or less, 40 wt% or less, or 30 wt% or less.

The addition of nicotine to the oral composition described above preferably involves adding a nicotine-carrying material from the viewpoint of assured nicotine supply and ease of handling. In general, addition of tobacco powder tends to make the color of the oral composition or the pouch product the same as the color of tobacco leaves, while use of a colorless nicotine-containing compound can provide a white oral composition or pouch product. This form of addition is advantageous for users who prefer white pouch products.

The forms of addition described above may be employed singly or may be employed in combination of two or more.

The nicotine (including plant extract-derived nicotine) content in the oral composition is typically, but not necessarily, 0.20 wt% or more, preferably 1.0 wt% or more, more preferably 2.5 wt% or more, and typically 7.0 wt% or less, preferably 5.0 wt% or less, more preferably 4.0 wt% or less, from the viewpoint of preference of users.

The same range of nicotine content can apply, for example, when any of the material having nicotine carried on an ion exchange resin, the tobacco material containing tobacco powder, and the nicotine-containing extract is used as a nicotine source.

When nicotine is present as ions, the nicotine content is a nicotine ion content.

The nicotine content in the oral composition can be measured by using a gas chromatography mass spectrometer (GC-MS), liquid chromatography (LC, UV detection), or other means.

(Other Substances)

The oral composition may contain substances (other substances) other than the base material and nicotine. Examples of other substances include moisturizers, pH adjusters, gelling agents, gelling aid components, water, flavoring agents, sweeteners, bitterness inhibitors, whitening agents, and emulsifiers.

The content of other substances in the oral composition is not limited, and blending of substances having an unspecified preferred content can be appropriately adjusted according to the product design.

Examples of the type of moisturizer include, but are not limited to, glycerine, propylene glycol, petrolatum, and lactic acid. The oral composition preferably contains at least one selected from the group consisting of these substances. Glycerine is preferred from the viewpoint of product preservation. These substances may be used singly or may be used in any combination of two or more at any ratio.

The oral composition may contain a pH adjuster. Examples of the pH adjuster include sodium carbonate, sodium hydrogen carbonate, potassium carbonate, potassium hydrogen carbonate, anhydrous sodium phosphate, sodium dihydrogen phosphate, and sodium citrate.

Gelling agents are preferably, for example, polysaccharides with carboxyl groups, specifically preferably carrageenan, pectin, gum arabic, xanthan, gellan, gum tragacanth, and alginic acid, and furthermore preferably carrageenan, pectin, gellan, and alginic acid because gelation tends to occur in the presence of calcium ions, and carboxyl groups and cations together form junction zones to form a cross-linked structure. Of these gelling agents, LM pectin is preferred for the reasons described below. These substances may be used singly or may be used in any combination of two or more at any ratio.

Examples of gelling aid components include calcium ions. Examples of calcium ion sources (gelling aids) include, but are not limited to, halogenates (e.g., chloride), citric acid, carbonate, sulfate, phosphate, and lactate of calcium. Of these, calcium lactate, calcium carbonate, and calcium phosphate are preferred, and calcium lactate is especially preferred from the viewpoint of a small effect on the taste of the pouch product, high solubility, and pH after dissolution. These substances may be used singly or may be used in any combination of two or more at any ratio.

Examples of gelling aid components other than calcium ions include metal ions, such as magnesium, silver, zinc, copper, gold, and aluminum ions; and cationic polymer ions. These ions enable bonding of gelling agents through ionic bonds, like calcium ions. Examples of sources of these ions (other gelling aids) include, but are not limited to, halogenates (e.g., chlorides), citric acid, carbonates, sulfates, phosphates, and lactates of these metal ions, and cationic polymers. These substances may be used singly or may be used in any combination of two or more at any ratio.

The oral composition may contain water. The water content (moisture content) of the oral composition is typically 15 wt% or more. If the moisture content is less than 15 wt%, the texture tends to be rough, and it is also difficult to produce the oral composition. To provide the oral composition with good fluidity and adhesion and easily produce the oral composition, the water content is preferably 30 wt% or more, more preferably 45 wt% or more, and typically 55 wt% or less, preferably 50 wt% or less. The moisture content can be adjusted by adjusting the amount of water added or providing the heating process or the drying process at the production stage.

The water content (moisture content) of the oral composition is measured by using a heating and drying-type moisture analyzer (e.g., HB 43-S available from Metter-Toledo International Inc.). In the measurement, a sample is placed in a predetermined container and heated to an attainment temperature of 100°C. The measurement is terminated when the amount of change in weight for 60 seconds is 1 mg or less, and the moisture content is calculated from the weight values before and after heating.

The method for measuring the moisture content in this description can apply to the measurement of the moisture content of an object other than the oral composition, for example, the moisture content of a mixture in the method for producing the oral composition described below.

The content of other substances in the oral composition is not limited and can be appropriately controlled according to the product design.

Examples of flavoring agents include menthol, tobacco leaf extract, natural plant flavoring agents (e.g., cinnamon, sage, herbs, chamomile, kudzu vine, Hydrangea leaves, cloves, lavender, cardamom, cloves, nutmeg, bergamot, geranium, honey essence, rose oil, lemon, orange, cassia bark, caraway, jasmine, ginger, coriander, vanilla extract, spearmint, peppermint, cassia, coffee, celery, cascarilla, sandalwood, cocoa, ylang-ylang, fennel, anise, licorice, Saint John's bread, plum extract, and peach extract), saccharides (e.g., glucose, fructose, isomerized sugar, caramel, honey, and molasses), cocoas (e.g., powder and extract), esters (e.g., isoamyl acetate, linalyl acetate, isoamyl propionate, and linalyl butyrate), ketones (e.g., menthone, ionone, damascenones, and ethyl maltol), alcohols (e.g., geraniol, linalool, anethole, and eugenol), aldehydes (e.g., vanillin, benzaldehyde, and anisaldehyde), lactones (e.g., $\gamma$-undecalactone and $\gamma$-nonalactone), animal flavoring agents (e.g., musk, ambergris, civet, and castoreum), and hydrocarbons (e.g., limonene and pinene). These substances may be used singly or may be used in any combination of two or more at any ratio.

Examples of sweeteners include sugar alcohols, such as xylitol, maltitol, and erythritol; and sweeteners, such as acesulfame potassium, sucralose, and aspartame. Sugar alcohols are preferred from the viewpoint of taste adjustment. These substances may be used singly or may be used in any combination of two or more at any ratio.

Examples of bitterness inhibitors include soy lecithins. Soy lecithins are phospholipids. Examples of soy lecithins include phosphatidylcholine, phosphatidylethanolamine, and phosphatidic acid. These substances may be used singly or may be used in any combination of two or more at any ratio.

Examples of whitening agents include fine silicon dioxide, titanium dioxide, and calcium carbonate. Fine silicon dioxide is preferred from the viewpoint of the effect on the taste of the product. These substances may be used singly or may be used in any combination of two or more at any ratio.

The contents of the components described above can also be calculated from the amounts of prepared raw materials.

The type of emulsifier is not limited and may be, for example, an emulsifier to be added to food. The emulsifier is, for example, at least one selected from the group consisting of sucrose fatty acid esters, organic acid glycerol fatty acid esters, polyglycerol fatty acid esters, and lecithin. Examples of sucrose fatty acid esters include sucrose palmitate and sucrose stearate. Examples of organic acid glycerol fatty acid esters include succinic and fatty acid esters of glycerol, and diacetyltartaric and fatty acid esters of glycerol. Examples of polyglycerol fatty acid esters include decaglycerol fatty acid esters.

The amount of the emulsifier in the oral composition may be typically 0.1 wt% or more and 10 wt% or less, preferably 10 wt% or more and 5.0 wt% or less.

(pH of Oral Composition)

The pH of the oral composition at a measurement temperature of25°C is typically, but not necessarily, 7.0 or higher, preferably 7.5 or higher, more preferably 8.0 or higher, and typically 10.0 or lower, preferably 9.5 or lower, more preferably 9.0 or lower, from the viewpoint of the effect on the taste of the product. The pH can be adjusted by controlling the amount of the pH adjuster added. In addition to the pH value described above, the pH value in this description is measured at a measurement temperature of22°C.

The pH of the oral composition at a measurement temperature of 25°C can be measured by measuring a supernatant of a mixture of 2 g of the oral composition with 20 ml of water by using a pH meter (e.g., available from HORIBA, Ltd.: LAQUA F-72 Flat ISFET pH electrode) after shaking the mixture for 10 minutes.

The pH meter is calibrated by, for example, 3-point calibration using a phthalate pH standard solution (pH 4.01), a neutral phosphate pH standard solution (pH 6.86), and a borate pH standard solution (pH 9.18) (all of the standard solutions are available from Wako Pure Chemical Corporation).

(Particle Size of Components of Oral Composition When Dried)

The oral composition is preferably composed of multiple types of solid granules, but the size of the granules is not limited. For example, the components of the dried oral composition preferably satisfy the following classification conditions.

The dried oral composition is preferably obtained by classification using a sieve with the following sieve opening. To improve the mouthfeel during usage by users, improve handling during production, and reduce variations in quality, the dried oral composition is typically a dried oral composition (< 15 mm) that passes through a sieve having a sieve opening of 15 mm, preferably a dried oral composition (< 10 mm) that passes through a sieve having a sieve opening of 10 mm, more preferably a dried oral composition (< 5 mm) that passes through a sieve having a sieve opening of 5 mm, still more preferably a dried oral composition (< 3.2 mm) that passes through a sieve having a sieve opening of 3.2 mm. For example, when the entire dried oral composition passes through a sieve having a sieve opening of 3.2 mm, this means that the oral composition when dried has a maximum particle size of 3.2 mm or less.

The lower limit of the particle size of the components of the oral composition when dried is not necessarily set, but typically 3 $\mu$m or more to prevent leakage from the pouch.

The dried oral composition is obtained by holding the oral composition at 70°C to 80°C for about 3 hours to dry the oral composition.

The maximum particle size of the oral composition can be appropriately increased/decreased by, for example, adjusting the particle size of the ion exchange resin on which nicotine is carried, the moisture content, and other parameters.

[Pouch]

The pouch (packaging material) is not limited and may be any known pouch that can enclose the oral composition, that is insoluble in water, and that is permeable to liquids (e.g., water and saliva) and water-soluble components in the oral composition. The material of the pouch may be, for example, a cellulose-based nonwoven fabric, and may be a commercially available nonwoven fabric. A sheet made of such a material is formed into a bag shape, the oral composition is placed in the bag, and the bag is sealed by means of heat sealing or other means to produce a pouch product.

The basis weight of the sheet is typically, but not necessarily, 12 gsm or more and 54 gsm or less, preferably 24 gsm or more and 30 gsm or less.

The thickness of the sheet is typically, but not necessarily, 100 $\mu$m or more and 300 $\mu$m or less, preferably 175 $\mu$m or more and 215 $\mu$m or less.

At least one of the inner surface and the outer surface of the pouch may be partially coated with a water-repellent material. The water-repellent material is preferably a water-repellent fluororesin. Specific examples of such a water-repellent fluororesin include AsahiGuard (registered trademark) available from AGC Inc. The water-repellent fluororesin is, for example, a resin on packaging materials for products and foods containing fats and oils, such as confectioneries, dairy products, daily dishes, fast foods, and pet foods. Therefore, such a water-repellent fluororesin is safe even when applied to a pouch to be placed in the oral cavity. The water-repellent material is not limited to a fluororesin and may be any material having water repellency, such as a paraffin resin, a silicon resin, or an epoxy resin.

The pouch may contain optional components. Examples of optional components include raw materials for adjusting the flavor and taste, flavoring agents, additives, tobacco extracts, and pigments. These components may be added in any manner. For example, the components may be applied to or infiltrated into the surface of the pouch, or when the pouch is made of fibers, the components may be added to the fibers.

Furthermore, the appearance of the pouch is not limited, and the pouch may be non-transparent, or translucent or transparent, and in these cases, the oral composition enclosed in the pouch can be seen through.

[Pouch Product]

The pouch product is not limited as long as the pouch product includes the oral composition and the pouch that encloses the oral composition (the pouch that encapsulates the oral composition).

The size and weight of the pouch product are not limited. For the size of the pouch product before use, the long side may be 25 mm (28 mm, 35 mm, or 38 mm) or more and 40 mm or less, or 28 mm or more and 38 mm or less, and the short side may be 10 mm or more and 20 mm or less, or 14 mm or more and 18 mm or less. The weight of the pouch product before use may be 0.1 g or more and 2.0 g or less, or 0.3 g or more and 1.0 g or less.

The ratio of the weight of the oral composition to the total weight of the pouch product is typically, but not necessarily, 80 wt% or more, preferably 85 wt% or more, more preferably 90 wt% or more, and typically 99 wt% or less, preferably 97 wt% or less, more preferably 95 wt% or less.

In the measurement of the properties in this description, a measurement sample is held in an environment similar to the measurement environment for 48 hours or longer before the measurement. Unless otherwise specified, the measurement temperature, the measurement humidity, and the measurement pressure are normal temperature ($22 \pm 2°C$), normal humidity ($60 \pm 5\%RH$), and normal pressure (atmospheric pressure), respectively.

<Applications of Oral Pouch Product>

Examples of applications (forms of use) of the oral pouch product include, but are not limited to, oral tobaccos, such as chewing tobacco, snuff, and compressed tobacco, and nicotine-containing preparations called nicotine pouches. These oral pouch products are placed between the lip and gum in the oral cavity to enjoy their taste and flavor.

EXAMPLES

The present invention will be described below in more detail by way of Examples. The present invention is not construed as being limited to Examples described below.

<Experiment 1>

<EXAMPLE 1>

[Extraction Step] Tobacco leaves and water were mixed at a weight ratio of 1:10, and the mixture was extracted at 85°C for 1 hour. The solid was roughly filtered out through a nonwoven fabric to achieve solid-liquid separation and thus to give an extract.

[Filtration Step] The extract obtained in the extraction step was filtered by using a cross-flow filtration equipment (Lab Unit M10 available from Alfa LavalAB) under the following conditions to give a filtrate.

- Average pore size of filtration membrane (filter): 0.2 $\mu$m
- Thickness of filtration membrane: 0.1 $\mu$m
- Membrane surface velocity relative to average pore size of filtration membrane: 0.9 mL/min·cm$^2$
- Temperature of extract being supplied: 45°C

[Dialysis Step] The filtrate obtained in the filtration step was subjected to electrodialysis by using an electrodialyzer (MICRO ACILYZER S3 available from ASTOM Corporation) under the following conditions to give a plant extract.
· Applied voltage: 10 V (separately carried out at 30 V to determine whether nicotine can remain in Experiment 2 described below) · Filtration membrane area: 0.055 m$^2$

- Average pore size of filtration membrane (filter): 5,000 Da

- Thickness of filtration membrane: 0.2 μm
- Membrane surface velocity relative to average pore size of filtration membrane: 0.004 mL/min·cm$^2$

<EXAMPLE 2>

The plant extract was obtained by the same method as in Example 1 except that the average pore size of the filtration membrane in the filtration step was changed from 0.2 μm to 5,000 Da (indicating the filtration ability is 5,000 Da).

<EXAMPLE 3>

The plant extract was obtained by the same method as in Example 1 except that the average pore size of the filtration membrane in the filtration step was changed from 0.2 μm to 100,000 Da.

<Comparative Example 1>

The plant extract was obtained by the same method as in Example 1 except that the filtration step was not carried out.

<Measurement of Protein Residual Level>

The plant extract was measured by using a spectrophotometer (SP300 available from Takara Bio Inc.) to determine a protein reduction caused by cross-flow filtration. Specifically, 20 μL of a BSA standard solution and 20 μL of a sample after cross-flow filtration were dispensed, and 1 ml of Bradford Dye Reagent was added and mixed to cause a reaction at a room temperature of 25°C for 5 minutes. The protein residual level in the solution after the reaction was measured at an absorbance of 595 nm (absorbance associated with BSA protein). The measurement results are shown in Table 1 and Fig. 4.

<Nicotine Analysis After Electrodialysis>

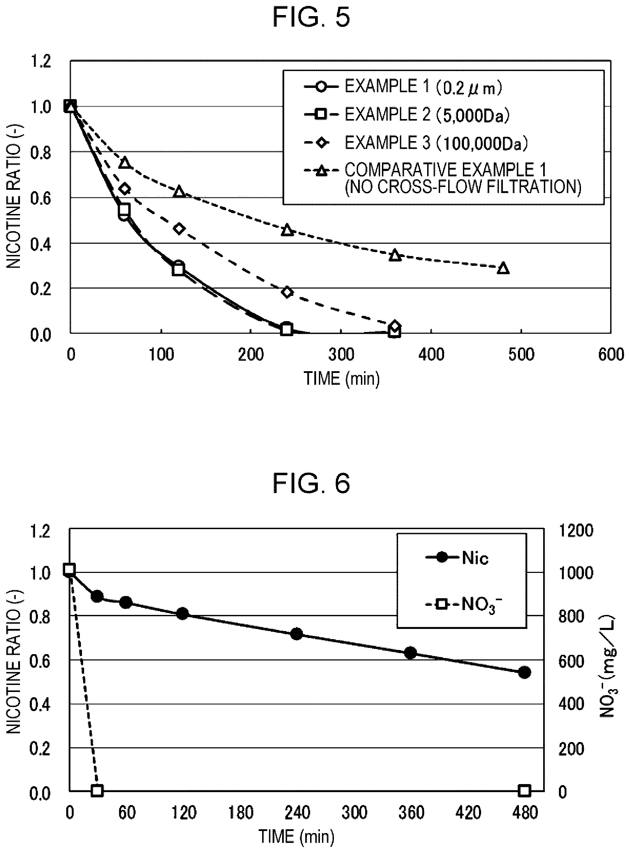

The nicotine ratio in the plant extract after electrodialysis was measured by the method in accordance with German Institute for Standardization DIN 10373. Specifically, 250 mg of the plant extract was collected, and 7.5 mL of 11% sodium hydroxide aqueous solution and 10 mL of hexane were added, followed by shaking extraction for 60 minutes. After extraction, the supernatant hexane phase in samples collected before extraction and 1 hour, 2 hours, 4 hours, 6 hours, and 8 hours after extraction was subjected to a gas chromatograph mass spectrometer (GC/MS) to determine the ratio of the peak area from nicotine in the samples before and after electrodialysis for evaluation. Specifically, provided that the ratio of nicotine before extraction was 1 (expressed as "0 hours" in Table 1 and Fig. 2), the ratio of nicotine at other times was relatively evaluated. The evaluation results are shown in Table 1 and Fig. 5. In Table 1, "-" indicates no measurement was carried out.

[Table 1]

|  |  | Example 1 | Example 2 | Example 3 | Comparative Example 1 |
|---|---|---|---|---|---|
| Average pore size of filtration membrane in cross-flow filtration |  | 0.2 μm | 5,000 Da | 100,000 Da | not used |
| Protein residual level | μg/ml | 1.09 | 0.90 | 1.03 | 2.00 |
| Nicotine ratio [-] | 0 hours | 1.00 | 1.00 | 1.00 | 1.00 |
|  | 1 hour | 0.52 | 0.54 | 0.64 | 0.75 |
|  | 2 hours | 0.29 | 0.28 | 0.46 | 0.63 |
|  | 4 hours | 0.01 | 0.01 | 0.18 | 0.46 |
|  | 6 hours | 0.01 | 0.01 | 0.03 | 0.35 |
|  | 8 hours | - | - | - | 0.29 |

Table 1 and Figs. 4 and 5 indicate that, compared with the plant extract production method according to Comparative Example 1 where no cross-flow filtration is carried out, the plant extract production methods according to Examples 1 to 3 where cross-flow filtration is carried out can reduce the protein residual level in the plant extract, and can increase the reduction rate of nicotine in the supernatant after extraction, that is, can efficiently reduce the nicotine content in the plant extract and furthermore can efficiently control the nicotine content in the plant extract.

Furthermore, comparison between Examples 1 to 3 indicate that the protein residual level decreases as the average pore size of the filtration membrane in the cross-flow filtration decreases.

<Experiment 2>

The plant extract was produced under the same conditions as in Example 1 in Experiment 1 except that the applied voltage in the dialysis step was changed from 10 V to 30 V Protein residual level measurement and nicotine analysis were performed by using the plant extract under the same conditions as in Experiment 1 described above. The analysis results are shown in Table 2. In addition, the nitrate ion ($NO_3^-$) concentration in each sample was separately measured and evaluated. The evaluation results are shown in Table 2 and Fig. 6.

[Table 2]

| | | Nicotine | $NO_3^-$ |
|---|---|---|---|
| Average pore size of filtration membrane in cross-flow filtration | | 0.2 μm | |
| Protein residual level | μg/ml | 1.03 | |
| Component ratio [-] | 0 hours | 1.00 | 1.00 |
| | 0.5 hours | 0.89 | 0.00 |
| | 1 hour | 0.86 | - |
| | 2 hours | 0.81 | - |
| | 4 hours | 0.72 | - |
| | 6 hours | 0.63 | - |
| | 8 hours | 0.54 | 0.00 |

Table 2 and Fig. 6 indicate that the plant extract production methods according to Examples can reduce the protein residual level and the nitrate ions in the plant extract and can increase the reduction rate of nicotine in the supernatant after extraction, that is, can efficiently control the nicotine content in the plant extract.

Therefore, Tables 1 to 2 and Figs. 4 to 6 indicate that the plant extract production methods according to Examples can efficiently control the nicotine content in the plant extract.

As described above, the present invention can provide an oral pouch product having pH stability during storage and a method for producing the oral pouch product.

Reference Signs List

10    tocco product
11    tobacco rod portion
12    cooling segment
13    filter segment
14    mouthpiece portion
15    tipping paper
V    perforation
20    electric heating device
21    heater member
22    battery unit
23    control unit
24    body
30    electric heating tobacco product

**Claims**

1.  A plant extract production method comprising:

    an extraction step of obtaining an extract by extraction from a plant dispersion containing a plant;
    a filtration step of obtaining a filtrate by filtering the extract by means of cross-flow filtration; and
    a dialysis step of dialyzing the filtrate by means of electrodialysis.

2.  The plant extract production method according to claim 1, wherein the cross-flow filtration involves passing the extract through a filter composed of a filtration membrane having an average pore size of 0.2 $\mu$m or less.

3.  The plant extract production method according to claim 2, wherein the filtration membrane has an average pore size of 2,000 Da or more and 100,000 Da or less.

4.  The plant extract production method according to any one of claims 1 to 3, wherein a membrane surface velocity relative to an average pore size of the filtration membrane in the cross-flow filtration is 0.1 mL/min·cm$^2$ or more and 10 mL/min·cm$^2$ or less.

5.  The plant extract production method according to any one of claims 1 to 4, wherein an applied voltage in the electrodialysis is 30 V or less.

6.  The plant extract production method according to any one of claims 1 to 5, wherein the plant dispersion further contains water.

7.  The plant extract production method according to any one of claims 1 to 6, wherein the plant is a tobacco plant.

8.  A method for producing a tobacco product having a mouthpiece portion and a tobacco rod in which wrapping paper is wrapped around a tobacco filling material, the method comprising:
    a step of adding a plant extract produced by the plant extract production method according to any one of Claims 1 to 7 to at least one selected from the group consisting of the tobacco filling material and the wrapping paper.

9.  A method for producing an oral pouch product having an oral composition and a pouch that encloses the oral composition, the method comprising:
    a step of adding, to the oral composition, a plant extract produced by the plant extract production method according to any one of Claims 1 to 7.

# FIG. 1

# FIG. 2

# FIG. 3

# FIG. 4

## FIG. 5

## FIG. 6

## INTERNATIONAL SEARCH REPORT

| | |
|---|---|
| International application No. |
| **PCT/JP2022/045911** |

### A. CLASSIFICATION OF SUBJECT MATTER

***B01D 11/02***(2006.01)i; ***B01D 61/14***(2006.01)i; ***B01D 61/22***(2006.01)i; ***B01D 61/44***(2006.01)i; ***B01D 61/54***(2006.01)i;
***B01D 61/58***(2006.01)i; ***B01D 69/00***(2006.01)i; ***A24B 15/24***(2006.01)i; ***A24D 1/20***(2020.01)i; ***A24B 13/00***(2006.01)i
FI:    B01D61/14 500; A24B15/24; A24D1/20; A24B13/00; B01D11/02 A; B01D61/44 500; B01D69/00; B01D61/58;
B01D61/22; B01D61/54

According to International Patent Classification (IPC) or to both national classification and IPC

### B. FIELDS SEARCHED

Minimum documentation searched (classification system followed by classification symbols)

B01D11/02; B01D61/14; B01D61/22; B01D61/44; B01D61/54; B01D61/58; B01D69/00; A24B15/24; A24D1/20; A24B13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 3-22971 A (THE CALPIS FOOD IND. CO., LTD.) 31 January 1991 (1991-01-31) claims, examples | 1-6, 9 |
| Y | | 1-9 |
| X | CN 111574372 A (JING JING PHARMACEUTICAL CO., LTD.) 25 August 2020 (2020-08-25) claims, examples | 1-6, 9 |
| Y | | 1-9 |
| Y | JP 2019-518442 A (MASSACHUSETTS INST. OF TECHNOLOGY) 04 July 2019 (2019-07-04) claims, paragraph [0019], examples | 1-9 |
| Y | JP 56-140880 A (PHILIP MORRIS INC.) 04 November 1981 (1981-11-04) claims, examples | 1-9 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2022/045911** |

**C.     DOCUMENTS CONSIDERED TO BE RELEVANT**

| Category* | Citation of document, with indication, where appropriate, of the relevant passages | Relevant to claim No. |
| --- | --- | --- |
| Y | CN 104351943 A (CHINA TOBACCO ANHUI IND. CO., LTD.) 18 February 2015 (2015-02-18)<br>claims, examples | 1-9 |
| Y | WO 2020/213144 A1 (JAPAN TOBACCO INC.) 22 October 2020 (2020-10-22)<br>claims, fig. 1 | 8 |
| Y | WO 2011/093304 A1 (JAPAN TOBACCO INC.) 04 August 2011 (2011-08-04)<br>claims, fig. 1 | 9 |

Form PCT/ISA/210 (second sheet) (January 2015)

**INTERNATIONAL SEARCH REPORT**
Information on patent family members

International application No.

**PCT/JP2022/045911**

| Patent document cited in search report | | | Publication date (day/month/year) | Patent family member(s) | | | Publication date (day/month/year) |
|---|---|---|---|---|---|---|---|
| JP | 3-22971 | A | 31 January 1991 | US | 5087449 | A | |
| | | | | claims, examples | | | |
| | | | | EP | 404425 | A1 | |
| CN | 111574372 | A | 25 August 2020 | (Family: none) | | | |
| JP | 2019-518442 | A | 04 July 2019 | US | 2017/0325495 | A1 | |
| | | | | claims, paragraph [0029], examples | | | |
| | | | | WO | 2017/197052 | A1 | |
| JP | 56-140880 | A | 04 November 1981 | US | 4302308 | A | |
| | | | | claims, examples | | | |
| | | | | EP | 35052 | A1 | |
| CN | 104351943 | A | 18 February 2015 | (Family: none) | | | |
| WO | 2020/213144 | A1 | 22 October 2020 | EP | 3957197 | A1 | |
| | | | | claims, fig. 1 | | | |
| | | | | CN | 113784637 | A | |
| WO | 2011/093304 | A1 | 04 August 2011 | US | 2012/0298124 | A1 | |
| | | | | claims, fig. 1 | | | |
| | | | | EP | 2529634 | A1 | |
| | | | | TW | 201138655 | A | |

Form PCT/ISA/210 (patent family annex) (January 2015)

**EP 4 450 142 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3959246
- JP 2016511004 A
- US 3424171
- US 4150677
- US 4727889
- US 5235992
- US 5301694
- JP 3010667 A
- WO 2004098323 A
- US 4302308
- CN 104351943
- JP 2019518442 A
- WO 2013067511 A
- JP 2017218699 A

30